# EUROPÄISCHE PATENTSCHRIFT

(11) **EP 1 234 457 B1**
(45) Veröffentlichungstag und Bekanntmachung des Hinweises auf die Patenterteilung: **05.03.2008**
(21) Anmeldenummer: 00989822.2
(22) Anmeldetag: 01.12.2000
(51) Int. Cl.: H04Q 3/00

(54) **GATEWAY ZUM VERBINDEN VON TELEKOMMUNIKATIONSNETZWERKEN SOWIE DAZUGEHÖRIGES VERFAHREN**
GATEWAY FOR CONNECTING TELECOMMUNICATIONS NETWORKS AND A CORRESPONDING METHOD
PASSERELLE SERVANT A RELIER DES RESEAUX DE TELECOMMUNICATION AINSI QUE PROCEDE CORRESPONDANT

(30) Priorität: 03.12.1999 DE 19958233
(43) Veröffentlichungstag der Anmeldung: 28.08.2002
(73) Patentinhaber: Nokia Siemens Networks GmbH & Co. KG, 81541 München (DE)
(72) Erfinder: NICHOLSON, Frederic, 81379 München (DE); KRETEN, Thomas, 82178 Puchheim (DE)
(86) Internationale Anmeldenummer: PCT/DE2000/004289
(87) Internationale Veröffentlichungsnummer: WO 2001/041459

(56) Entgegenhaltungen:
- US-A- 5 852 660
- ANQUETIL L -P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION,ALCATEL. BRUSSELS,BE, 1. April 1999 (1999-04-01), Seiten 151-157, XP000830045 ISSN: 0013-4252
- DAHLIN S ET AL: "NETWORK EVOLUTION THE ERCSSON WAY" ERICSSON REVIEW,SE,ERICSSON. STOCKHOLM, Nr. 4, 1999, Seiten 174-181, XP000877963 ISSN: 0014-0171
- TAPANI NIEMINEN ET AL: "A GATEWAY BETWEEN AN EUROCOM D/1-NETWORK AND A PRIVATE PTT-TYPE CCITT SS7-NETWORK" PROCEEDINGS OF THE MILITARY COMMUNICATIONS CONFERENCE (MILCOM),US,NEW YORK, IEEE, Bd. CONF. 11, 11. Oktober 1992 (1992-10-11), Seiten 149-153, XP000346720 ISBN: 0-7803-0586-8

## Beschreibung

Die vorliegende Erfindung bezieht sich auf ein Gateway zum Verbinden von Telekommunikationsnetzwerken sowie ein dazugehöriges Verfahren und insbesondere auf ein Gateway zum Verbinden eines leitungsvermittelnden Telekommunikationsnetzwerk mit einem Signalisierungsnetzwerk gemäß dem zentralen Zeichengabesystem Nr. 7 (CCS7) und einem paketvermittelnden Telekommunikationsnetzwerk gemäß dem Internet-Protokoll (IP).

Leitungsvermittelnde Telekommunikationsnetze bzw. -netzwerke verbinden für den Nachrichtenaustausch (z. B. Sprache, Daten, Text und/oder Bilder) in der Regel zwei Teilnehmerendeinrichtungen über mehrere Leitungsabschnitte und Vermittlungseinrichtungen direkt miteinander, d.h. in fest zugeordneten Zeitschlitzen. Bei der Verbindungssteuerung und bei der Anwendung von Dienstmerkmalen sind dabei zwischen den Vermittlungsstellen Steuerinformationen bzw. Signalisierungs-Nachrichten zu übertragen. Insbesondere digitale, rechnergesteuerte Telekommunikationsnetzwerke bieten gegenüber analogen Telekommunikationsnetzwerken einen wesentlich höheren Leistungsumfang, weshalb in digitalen rechnergesteuerten Telekommunikationsnetzwerken ein neues leistungsfähiges Zeichengabesystem eingeführt wurde.

Die ITU (International Telecommunication Union) hat daher für leitungsvermittelnde Telekommunikationsnetzwerke das zentrale Zeichengabesystem Nr. 7 (CCS7, common channel signaling system no. 7) spezifiziert, welches für den Einsatz in digitalen Netzen optimiert ist.

Im Gegensatz zu der bisher üblichen kanalgebundenen Zeichengabe bzw. Signalisierung werden beim CCS7 die Signalisierungs-Nachrichten über separate Zeichengabestrecken bzw. Signalisierungs-Datenkanäle geführt. Ein Signalisierungs-Datenkanal transportiert hierbei die Zeichengabe- bzw. Signalisierungs-Nachrichten für eine Vielzahl von Nutzkanälen.

Die Signalisierungs-Datenkanäle des CCS7 verbinden in einem leitungsvermittelnden Telekommunikationsnetzwerk sogenannte Nachrichtentransferteile (MTP, message transfer points) miteinander. Diese Nachrichtentransferteile bilden gemeinsam mit den Siganlisierungs-Kanälen somit ein eigenständiges Zeichengabenetz bzw. Siganlisierungsnetz, das einem dazugehörigen Nutzkanalnetz überlagert ist.

Zeichengabe-Punkte (SPC, signaling point code) sind hierbei die Quellen und Senken des Zeichengabe-Verkehrs innerhalb des leitungsvermittelnden Telekommunikationsnetzwerks und werden in erster Linie durch Vermittlungsstellen bzw. Signalisierungsknoten realisiert. Hierbei vermitteln die Nachrichtentransferteile empfangene Signalisierungs-Nachrichten vorzugsweise anhand einer Zieladresse (destination point code, DPC) zu einem anderen Nachrichtentransferteil. Ein derartiger Nachrichtentransferteil kann entweder in einem Zeichengabe-Endpunkt, d. h. einer Vermittlungsstelle, integriert sein oder einen eigenen Signalisierungsknoten im Signalisierungsnetz bilden. Je nach Größe des Signalisierungsnetzes sind darüber hinaus eine oder mehrere Ebenen von derartigen Nachrichtentransferteilen möglich.

Alle Zeichengabe-Punkte (SPC, signaling point code) in einem vorgegebenen Signalisierungsnetz sind im Rahmen eines durch die ITU festgelegten Numerierungsplanes durch beispielsweise einen 14-Punkt-Code gekennzeichnet und können so in einer Signalisierungs-Nachricht gezielt adressiert werden. Im zentralen Zeichengabesystem Nr. 7 (CCS7) ist eine derartige Signalisierungs-Nachricht durch die Nachrichtenzeicheneinheit (MSU, message signal unit) realisiert.

In diesen im Signalisierungsnetz übertragenen Signalisierungs-Nachrichten bzw. Nachrichten-Zeicheneinheiten (MSU) werden im wesentlichen neben der Zieladresse (destination point code, DPC) und einer Ursprungsadresse (origin point code, OPC) auch eine Sprechkreisadresse (circuit identification code, CIC) abgelegt. Diese Sprechkreisadresse (CIC) besitzt gemäß ITU-Standard 12 Bit, wodurch die Signalisierungs-Nachricht einem bestimmten Nutzkanal zugeordnet wird. Eine Sprechkreisadresse (CIC) ist hierbei an jeden Nutzkanal fest vergeben, wodurch sich ein äußerst effizientes leitungsvermittelndes Telekommunikationsnetzwerk ergibt.

Insbesondere durch die rasante Entwicklung des INTERNETs besteht jedoch zunehmend der Bedarf einer Verbindung von derartigen herkömmlichen leitungsvermittelnden Telekommunikationsnetzwerken mit sogenannten paketvermittelnden bzw. paketorientierten Telekommunikationsnetzwerken wie beispielsweise dem INTERNET. Da jedoch, wie vorstehend beschrieben wurde, ein leitungsvermittelndes Telekommunikationsnetz mit dazugehörigem Signalisierungsnetz ein im wesentlichen geschlossenes System darstellt, ergeben sich bei einer einfachen Ankoppelung der beiden Telekommunikationsnetzwerke eine Vielzahl von Problemen.

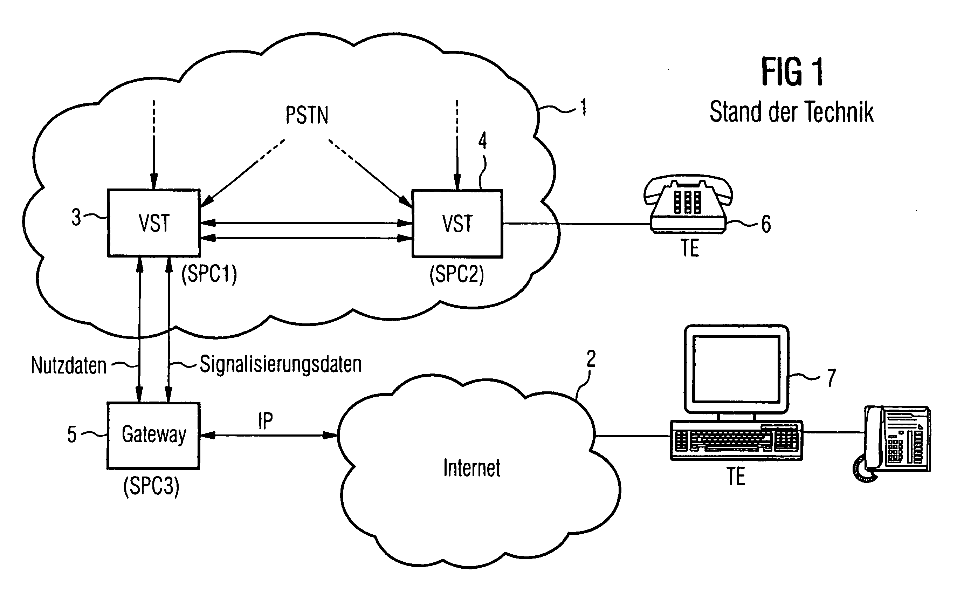

Figur 1 zeigt eine vereinfachte Darstellung von derartigen unterschiedlichen Telekommunikationsnetzwerken, die über ein herkömmliches Gateway miteinander verbunden werden. Gemäß Figur 1 besteht das leitungsvermittelnde Telekommunikationsnetzwerk 1 (PSTN, public switched telecommunication network) aus einer Vielzahl von Vermittlungsstellen 3 und 4 (VST), die über eine Vielzahl von Nutz- und Signalisierungskanal-Datenschnittstellen (-leitungen) in Verbindung stehen. An zumindest eine der Vermittlungsstellen des leitungsvermittelnden Telekommunikationsnetzwerks 1 ist beispielsweise eine Teilnehmerendeinrichtung 6 (TE) angeschaltet.

Zur Realisierung einer Verbindung zu einer weiteren Teilnehmerendeinrichtung 7 (TE), welche an ein paketvermittelndes bzw. paketorientiertes Telekommunikationsnetzwerk 2 (INTERNET) angeschaltet ist, benötigt man daher ein Gateway 5, welches sowohl die Nutzkanaldaten als auch die Signalisierungskanaldaten in die entsprechenden Formate der jeweiligen Telekommunikationsnetzwerke umsetzt. Genauer gesagt ist gemäß Figur 1 die Vermittlungsstelle 3 über eine Nutzkanal-Datenschnittstelle und eine Signalisierungskanal-Datenschnittstelle mit dem Gateway 5 verbunden. Andererseits besitzt das Gateway 5 eine Datenschnittstelle IP zum paketvermittelnden Telekommunikationsnetzwerk 2, welches vorzugsweise das INTERNET darstellt. Auf diese Weise erhält man eine relativ einfache Anbindung der zwei unterschiedlichen Telekommunikationsnetzwerke, welche üblicherweise als "stand-alone-Gateway" bezeichnet wird.

Nachteilig ist jedoch bei dieser herkömmlichen Lösung die Tatsache, daß das Gateway 5 einen zusätzlichen Zeichengabe-Punktcode SPC3 (signaling point code 3) erhalten muß, damit es über das zentrale Zeichengabesystem Nr. 7 des leitungsvermittelnden Telekommunikationsnetzwerks 1 gezielt ausgewählt bzw. adressiert werden kann. Dieses bedeutet folglich, daß bei einer Vielzahl von derartigen "stand-alone-Gateways" eine massive Erweiterung hinsichtlich der Zeichengabe-Punktcodes SPC des Telekommunikationsnetzwerks 1 durchgeführt werden muß, was einerseits äußerst kostspielig ist und andererseits ein hohes Risiko für die in sich geschlossene Netzwerkstruktur bedeutet, da jedes neue Element die Netzstruktur ändert und unabsehbare Störungen im Telekommunikationsnetzwerk verursachen kann.

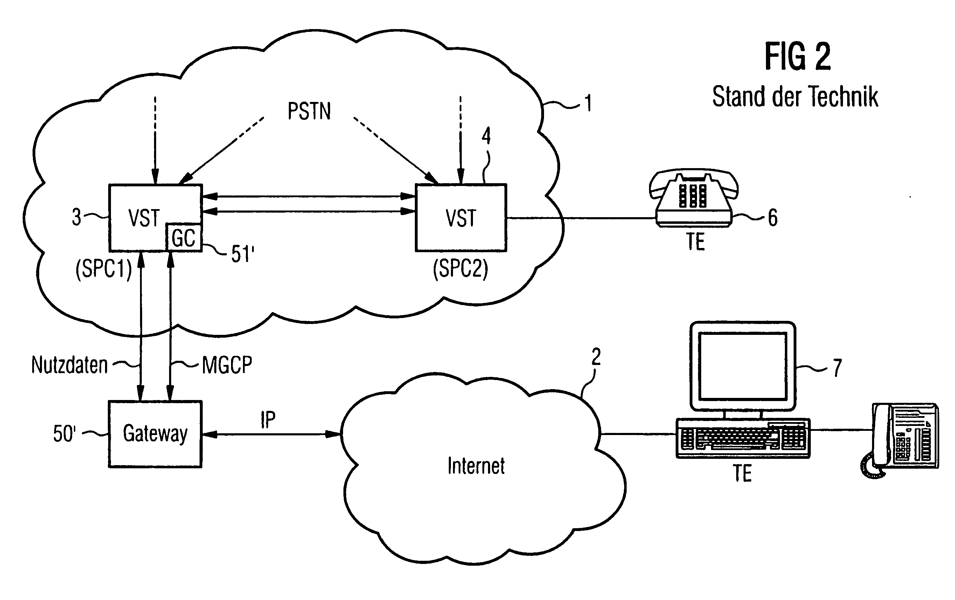

Figur 2 zeigt eine weitere Möglichkeit zur Realisierung eines Gateways zum Verbinden von unterschiedlichen Telekommunikationsnetzwerken gemäß einem nicht veröffentlichten firmeninternen Stand der Technik. Gleiche Bezugszeichen bezeichnen hierbei gleiche oder ähnliche Elemente, weshalb auf eine detaillierte Beschreibung nachfolgend verzichtet wird.

Zur Vermeidung der Erweiterung des Zeichengabe-Punktcodes (signaling point code) durch Einführung eines "stand-alone"-Gateways wird gemäß Figur 2 das Gateway in einen Nutzkanaldatenumsetzer 50' und einen Signalisierungskanaldatenumsetzer 51' aufgeteilt, wobei der Nutzkanaldatenumsetzer 50' lediglich die von der Vermittlungsstelle 3 kommenden Nutzkanaldaten in ein entsprechendes IP-Format umsetzt. Die eigentliche Auswertung und Umsetzung der Signalisierungsdaten findet hierbei weiterhin in der Vermittlungsstelle 3 bzw. einem unmittelbar darin integrierten Signalisierungskanaldatenumsetzer 51' statt, der über eine spezielle Signalisierungs-Datenschnittstelle MGCP (media gateway control protocol) den Nutzkanaldatenumsetzer 50' zum Auswählen von entsprechenden Adreßinformationen für das paketvermittelnde Telekommunikationsnetzwerk 2 ansteuert. Bei dieser Lösung wird demzufolge das äußerst kritische Erweitern des Zeichengabe-Punktcodes (signaling point code, SPC) im leitungsvermittelnde Telekommunikationsnetz umgangen, da nunmehr die Vermittlungsstelle 3 mit ihrem Zeichengabe-Punktcode SPC1 sowohl das Gateway bzw. den Nutzkanaldatenumsetzer 50' als auch den Nachrichtentransferteil der Vermittlungsstelle 3 im zentralen Zeichengabesystem Nr. 7 des leitungsvermittelnden Telekommunikationsnetzwerks 1 realisiert. Da sich die Netzstruktur nicht ändert besteht somit keine Gefahr von Störungen im Telekommunikationsnetzwerk 1, welches weiterhin äußerst geringe Ausfallzeiten aufweist. Nachteilig ist jedoch bei einer derartigen Lösung, daß ein Hersteller einer derartigen Lösung sehr genaue Kenntnisse der jeweiligen Vermittlungsstellen im leitungsvermittelnden Telekommunikationsnetzwerk 1 besitzen muß und folglich nur von Systemherstellern des Telekommunikationsnetzwerkes 1 zu realisieren ist.

Eine weitere (nicht dargestellte) Möglichkeit zur Realisierung eines Gateways zum Verbinden von unterschiedlichen Telekommunikationsnetzwerken besteht darin, den in Figur 2 dargestellten Nutzkanaldatenumsetzer 50' ebenfalls in der Vermittlungsstelle 3 integriert zu realisieren, wodurch keinerlei externe Komponenten auftreten und eine Lösung sozusagen "aus einem Guß" angeboten werden kann. Nachteilig ist hierbei jedoch wiederum wie bei der vorstehend beschriebenen Lösung die Tatsache, daß lediglich Systemhersteller in genauer Kenntnis der jeweiligen Vermittlungsstelle 3 eine derartige Integration des Gateways realisieren können.

Weiterhin ist aus der Druckschrift Anquetil L-P et al.: "Media Gateway Control Protocol and Voice over IP Gateways", E-lectrical Communication, Alcatel Brussels, BE, 1. April 1999, Seiten 151-157 zum Verbinden eines auf SS7 basierenden leitungsvermittelnden Telekommunikationssystems mit einem auf IP basierenden paketvermittelnden Telekommunikationssystems ein Media Gateway Controller eingesetzt. Zum Weiterleiten der Signalisierungsinformation sind hierbei aufwändige Signalling Gateways verwendet.

Der Erfindung liegt daher die Aufgabe zugrunde, einen Gateway zum Verbinden von Telekommunikationsnetzwerken sowie ein dazugehöriges Verfahren zu schaffen, bei dem ohne wesentlichen Eingriff in die Netzwerkstruktur eines des Telekommunikationsnetzwerke eine Verbindung einfach und kostengünstig realisiert werden kann.

Erfindungsgemäß wird diese Aufgabe hinsichtlich des Gateways durch die Merkmale des Patentanspruchs 1 und hinsichtlich des Verfahrens durch die Maßnahmen des Patentanspruchs 10 gelöst.

Insbesondere durch das Verbinden eines Nutzkanaldatenumsetzers über zumindest eine zusätzliche leitungsvermittelnde Nutz-/Signalisierungskanal-Datenschnittstelle und durch das Einfügen eines Signalisierungskanaldatenumsetzers in eine bereits existierende Nutz-/Signalisierungskanal-Datenschnittstelle des leitungsvermittelnden Telekommunikationsnetzwerks, wobei die auf dieser Datenschnittstelle übertragenen Signalisierungsinformationen für die zusätzliche Nutz-/Signalisierungskanal-Datenschnittstelle herausgefiltert wird, erhält man eine Anbindung an ein paketvermittelndes Telekommunikationsnetzwerk, ohne dabei die Netzstruktur des leitungsvermittelnden Telekommunikationsnetzwerks zu ändern. Insbesondere müssen hierbei keine zusätzlichen Zeichengabe-Punktcodes vergeben werden, wobei sich trotzdem eine quasi-"stand-alone-Gateway" Lösung ergibt.

Vorzugsweise ist der Signalisierungskanaldatenumsetzer über eine spezielle Signalisierungskanal-Datenschnittstelle mit dem Nutzkanaldatenumsetzer verbunden, wodurch sich eine besonders einfache Ansteuerung des Nutzkanaldatenumsetzers ergibt.

Darüber hinaus kann jedoch auch eine weitere Signalisierungskanal-Datenschnittstelle unmittelbar mit dem paketvermittelnden Telekommunikationsnetzwerk verbunden sein, wodurch sich eine unmittelbare Pfadsuche gemäß der neuesten IP-Standards realisieren läßt.

Zur Verbesserung einer Ausfallsicherheit können ferner der Signalisierungskanaldatenumsetzer und/oder der Nutzkanaldatenumsetzers redundant realisiert sein.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
- Figur 1: eine vereinfachte Darstellung einer Gateway-Struktur gemäß dem Stand der Technik;
- Figur 2: eine vereinfachte Darstellung einer weiteren Gateway-Struktur gemäß dem Stand der Technik;
- Figur 3: eine vereinfachte Darstellung einer erfindungsgemäßen Gateway-Struktur; und
- Figur 4: eine schematische Darstellung zum Veranschaulichen der Funktionsweise eines Signalisierungskanaldatenumsetzers gemäß Figur 3.

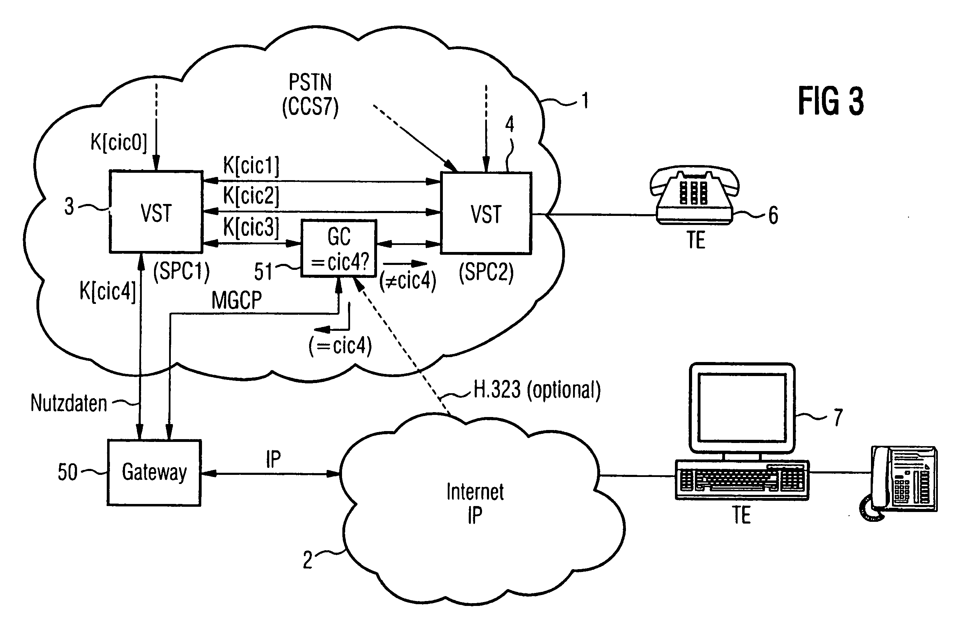

Figur 3 zeigt eine vereinfachte Darstellung einer Gateway-Struktur gemäß der vorliegenden Erfindung, wobei gleiche Bezugszeichen gleiche oder ähnliche Elemente wie in Figuren 1 und 2 bezeichnen und auf eine detaillierte Beschreibung nachfolgend verzichtet wird.

Gemäß Figur 3 besteht ein leitungsvermittelndes Telekommunikationsnetzwerk 1 (public switched telephone network, PSTN) aus einer Vielzahl von Vermittlungsstellen 3 und 4, die über eine Vielzahl von Nutz-/Signalisierungskanal-Datenschnittstellen k[cic0] bis k[cic3] miteinander in Verbindung stehen. Die Signalisierung im leitungsvermittelnden Telekommunikationsnetzwerk 1 wird vorzugsweise über das zentrale Zeichengabesystem Nr. 7 (CCS7, common channel signaling system no. 7) realisiert, ist jedoch nicht darauf beschränkt. Die Nutz-/Signalisierungskanal-Datenschnittstellen k[cic0] bis k[cic3] dienen hierbei sowohl zum Übertragen von Nutzkanaldaten als auch zum Übertragen von Signalisierungskanaldaten und bestehen vorzugsweise aus PCM30-Übertragungsleitungen.

Zur Anbindung des leitungsvermittelnden Telekommunikationsnetzwerks 1 mit einem paketvermittelnden bzw. paketorientierten Telekommunikationsnetzwerk 2 wird gemäß Figur 3 eine weitere leitungsvermittelnde Nutz-/Signalisierungskanal-Datenschnittstelle k[cic4] zusätzlich eingerichtet und mit einem Nutzkanaldatenumsetzer bzw. Media Gateway 50 zum Umsetzen von Nutzkanaldaten zwischen dem PCM30-Format des leitungsvermittelnden Telekommunikationsnetzwerks 1 und dem im paketvermittelnden Telekommunikationsnetzwerk 2 gültigen Format, das beispielsweise im INTERNET das Internet-Protokoll IP darstellt.

Die zusätzliche Nutz-/Signalisierungskanal-Datenschnittstelle k[cic4] dient vorzugsweise zur Übertragung von Nutzkanaldaten (z. B. Sprachkanäle), welche eindeutige Sprechkreisadressen (CIC, circuit identification code) aufweisen, mit denen sie innerhalb der Nutz-/Signalisierungskanal-Datenschnittstelle k[cic3] eindeutig identifizierbar sind. Genauer gesagt wird der zusätzlichen Nutz-/Signalisierungskanal-Datenschnittstelle k[cic4] eine zusätzliche Sprechkreisadresse cic4 zugeordnet, welche fest eingestellt und beispielsweise nur über einen Signalisierungskanal der Nutz-/Signalisierungskanal-Datenschnittstelle k[cic3] übertragen wird. Wie bereits einleitend beschrieben wurde, ordnet diese Sprechkreisadresse (cic) eine jeweilige Signalisierungs-Nachricht einem vorbestimmten Nutzkanal zu und ist an diesen fest vergeben.

Ferner ist in die Nutz-/Signalisierungskanal-Datenschnittstelle k[cic3] ein Signalisierungskanaldatenumsetzer 51 (gateway controller, GC) eingefügt, der im wesentlichen eine Filterfunktion für die in der Nutz-/Signalisierungskanal-Datenschnittstelle k[cic3] übertragenen Sprechkreisadressen cic4 darstellt. Dem Signalisierungskanaldatenumsetzer 51 sind hierbei diese neuen Sprechkreisadressen (z.B. cic4) bekannt, während die dahinterliegende Vermittlungsstelle 4 (VST) mit ihrem Zeichengabe-Punktcode SPC2 diese neuen Sprechkreisadressen (z.B. cic4) nicht kennt und auch nicht kennen muß.

Der Signalisierungskanaldatenumsetzer 51 überprüft nun, ob bei einer der ankommenden Signalisierungs-Nachrichten von der Vermittlungsstelle 3 mit dem Zeichengabe-Punktcode SPC1 einer der neuen bzw. zusätzlichen Sprechkreisadressen (z.B. cic4) betroffen ist. Falls dieses nicht der Fall ist, werden die Signalisierungs-Nachrichten transparent ohne Modifikation an die Vermittlungsstelle 4 weitergereicht. Falls jedoch eine Signalisierungs-Nachricht mit einer vorbestimmten Sprechkreisadresse (z.B. cic4) erfaßt wird, die einem Nutzkanal der Nutz-/Signalisierungskanal-Datenschnittstelle k[cic4] zugeordnet ist, so wird diese Signalisierungs-Nachricht herausgefiltert bzw. aus dem jeweiligen Zeitschlitz des Signalisierungssystems entfernt und anschließend ausgewertet.

Auf der Grundlage der herausgefilterten vorbestimmten Sprechkreisadresse (z.B. cic4) bzw. der dazugehörigen Signalisierungs-Nachricht erfolgt eine Umsetzung beispielsweise in das Steuerprotokoll Media Gateway Control Protocol (MGCP) zur Ansteuerung des Nutzkanaldatenumsetzers 50, der entsprechend dieser empfangenen Informationen die Nutzkanaldaten in entsprechende Pakete schnürt und mit dazugehörigen Adressen in das paketvermittelnde Telekommunikationsnetzwerk 2 absendet. Die zwischen dem Nutzkanaldatenumsetzer 50 und dem Signalisierungskanaldatenumsetzer 51 bestehende spezielle Signalisierungs-Schnittstelle wird vorzugsweise durch eine ETHERNET-Schnittstelle realisiert.

Zur Realisierung von unmittelbaren Signalisierungs-Schnittstellen kann gemäß Figur 3 optional eine weitere Signalisierungs-Schnittstelle gemäß H.323-Standard vorgesehen werden, die beispielsweise unmittelbar mit dem paketvermittelnden Telekommunikationsnetzwerk 2 verbunden ist und eine unmittelbare Pfadsuche im paketvermittelnden Telekommunikationsnetzwerk 2 ermöglicht. Eine derartige Signalisierungs-Schnittstelle besitzt definierte Netzübergänge beispielsweise zwischen ISDN und ATM und garantiert somit die Interoperabilität von unterschiedlichen Herstellerprodukten. Gemäß H.323-Standard kann somit eine Multimedia-Kommunikation realisiert werden, die keine garantierte Dienstgüte zur Verfügung stellt und benötigt.

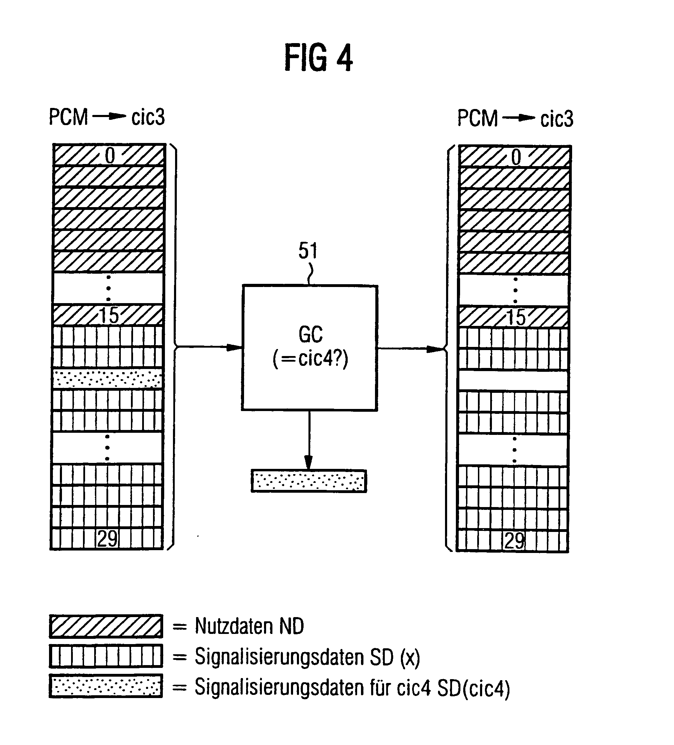

Figur 4 zeigt eine schematische Darstellung zur Veranschaulichung der Funktionsweise im Signalisierungskanaldatenumsetzer 51 gemäß Figur 3. Auf der linken Seite ist hierbei eine vereinfachte Darstellung einer PCM30-Datenschnittstelle dargestellt, wie sie beispielsweise zwischen der Vermittlungsstelle 3 und dem Signalisierungskanaldatenumsetzer 51 existiert. Demgegenüber ist auf der rechten Seite eine vereinfachte Darstellung einer PCM30-Datenschnittstelle gezeigt, wie sie beispielsweise zwischen dem Signalisierungskanaldatenumsetzer 51 und der Vermittlungsstelle 4 existiert.

Gemäß Figur 3 besitzt diese Datenschnittstelle die Sprechkreisadresse cic3, wodurch ihre Nutzkanäle eindeutig festgelegt sind. In der beispielhaften Darstellung gemäß Figur 4 befinden sich die Nutzkanaldaten ND in den ersten 16 Kanälen der PCM30-Datenschnittstelle. In den weiteren Kanälen liegen hierbei die Signalisierungskanaldaten SD, welche beispielsweise zum zentralen Zeichengabesystem Nr. 7 (CCS7) gehören. Durch einfache Änderung bzw. Modifikation von Routing-Tabellen in der Vermittlungsstelle 3 können nunmehr Signalisierungskanaldaten mit der Sprechkreisadresse cic4, d.h. SD(cic4), realisiert werden, die gemäß Figur 3 beispielsweise eine eindeutige Zuordnung zu der Nutz-/Signalisierungskanal-Datenschnittstelle k[cic4] aufweisen. In Figur 4 sind derartige Signalisierungsdaten SD(cic4) gepunktet dargestellt, während alle weiteren Signalisierungsdaten SD(x) für die weiteren Nutzkanäle und weiteren Nutz-/Signalisierungskanal-Datenschnittstellen schraffiert sind.

Gemäß der vorliegenden Erfindung erfolgt im Signalisierungskanaldatenumsetzer 51 nunmehr eine gezielte Überprüfung auf alle Signalisierungsdaten, während die Nutzkanaldaten ND ohne weitere Überprüfung transparent zur Vermittlungsstelle 4 durchgereicht werden. Falls nun der Signalisierungskanaldatenumsetzer 51 bei der Überprüfung der übertragenen Signalisierungsdaten SD zumindest eine der neuen bzw. zusätzlichen Sprechkreisadressen (z.B. cic4) enthält, so wird diese aus dem PCM30-Rahmen herausgenommen, während die weiteren Signalisierungsdaten SD(x) wiederum transparent zur Vermittlungsstelle 4 durchgereicht werden. Die so ermittelte neue bzw. zusätzliche Signalisierungs-Nachricht mit der jeweiligen neuen bzw. zusätzlichen Sprechkreisadresse (z.B. cic4) wird anschließend ausgewertet und in ein entsprechendes Protokoll (z.B. MGCP) zum Ansteuern des Nutzkanaldatenumsetzers 50 oder unmittelbar zum Ansteuern des paketvermittelnden Telekommunikationsnetzwerks 2 umgesetzt (H.323).

Auf diese Weise erhält man eine Gateway-Realisierung, bei der keine nennenswerte Änderung der Netzwerkstruktur und insbesondere keine Erweiterung der Zeichengabe-Punktcodes (SPC) durchzuführen ist, da lediglich für die Vermittlungsstelle 3 der Signalisierungskanaldatenumsetzer 51 existiert und für alle weiteren Vermittlungsstellen im Netz dieser Umsetzer sozusagen unsichtbar ist. Es kann somit ohne Einfügen eines neuen Zeichengabe-Punktcodes (SPCs) und ohne wesentliche Veränderung der Hardwarestruktur, d.h. der Vermittlungsstellen (VST) auf einfache und kostengünstige Art und Weise eine Verbindung zwischen unterschiedlichen Telekommunikationsnetzwerken geschaffen werden.

Die Erfindung wurde vorstehend anhand des INTERNETS für ein paketvermittelndes Telekommunikationsnetzwerk mit seinem dazugehörigen Internet-Protokoll beschrieben. Sie ist jedoch nicht darauf beschränkt und umfaßt vielmehr jedes weitere paketvermittelnde bzw. paketorientierte Telekommunikationsnetzwerk. In gleicher Weise wurde vorstehend ein leitungsvermittelndes Telekommunikationsnetzwerk mit einem Signalisierungsnetzwerk gemäß zentralem Zeichengabesystem Nr. 7 beschrieben. In gleicher Weise kann auch jedes weitere leitungsvermittelnde Telekommunikationsnetzwerk mit einem anderen Signalisierungssystem realisiert werden.

## Patentansprüche

1. Gateway zum gegenseitigen Verbinden von einem leitungsvermittelnden Telekommunikationsnetzwerk (1) mit einem paketvermittelnden Telekommunikationsnetzwerk (2) mit
einem Nutzkanaldatenumsetzer (50) zum Umsetzen von Nutzkanaldaten zwischen einem leitungsvermittelnden und einem paketvermittelnden Format; und
einem Signalisierungskanaldatenumsetzer (51) zum Umsetzen von Signalisierungsdaten zwischen dem leitungsvermittelnden und paketvermittelnden Format,
**dadurch gekennzeichnet, dass**
der Nutzkanaldatenumsetzer (50) über zumindest eine zusätzliche leitungsvermittelnde Nutz-/Signalisierungskanal-Datenschnittstelle (k[cic4]) zum ausschließlichen Übertragen von Nutzkanaldaten (ND) mit einer Vermittlungsstelle (3) des leitungsvermittelnden Telekommunikationsnetzwerks (1) und über eine paketvermittelnde Datenschnittstelle (IP) mit dem paketvermittelnden Telekommunikationsnetzwerk (2) verbunden ist, und
der Signalisierungskanaldatenumsetzer (51) in eine bereits existierende Nutz-/Signalisierungskanal-Datenschnittstelle (k[cic3]) eingeschaltet wird, wodurch eine auf dieser Datenschnittstelle (k[cic3]) zusätzlich übertragene Signalisierungsinformation (SD(cic4)) für die zusätzliche Nutz-/Signalisierungskanal-Datenschnittstelle (k[cic4]) herausgefiltert wird und der Signalisierungskanaldatenumsetzer (51) den Nutzkanaldatenumsetzer (50) auf der Grundlage der herausgefilterten Signalisierungsinformationen (SD(cic4)) ansteuert.

2. Gateway nach Patentanspruch 1,
**dadurch gekennzeichnet, dass** der Signalisierungskanaldatenumsetzer (51) über eine spezielle Signalisierungskanal-Datenschnittstelle (MGCP) mit dem Nutzkanaldatenumsetzer (50) ansteuert.

3. Gateway nach Patentanspruch 1 oder 2,
**dadurch gekennzeichnet, dass** der Signalisierungskanaldatenumsetzer (51) über eine weitere Signalisierungs-Datenschnittstelle (H.323) unmittelbar mit dem paketvermittelnden Telekommunikationsnetzwerk (2) verbunden ist und eine unmittelbare Pfadsuche im paketvermittelnden Telekommunikationsnetzwerk (2) ermöglicht.

4. Gateway nach einem der Patentansprüche 1 bis 3,
**dadurch gekennzeichnet, dass** das leitungsvermittelnde Format das zentrale Zeichengabesystem Nr. 7 (CCS7) und das paketvermittelnde das Internet-Protokoll (IP) aufweist.

5. Gateway nach einem der Patentansprüche 2 bis 4,
**dadurch gekennzeichnet, dass** die spezielle Signalisierungs-Datenschnittstelle (MGCP) eine ETHERNET-Datenschnittstelle darstellt und als Format das Media Gateway Control Protocol aufweist.

6. Gateway nach einem der Patentansprüche 1 bis 5,
**dadurch gekennzeichnet, dass** der Signalisierungskanaldatenumsetzer (51) alle Nutzkanaldaten (ND) sowie nicht relevante Signalisierungsdaten (SD(x)) transparent weitergibt.

7. Gateway nach einem der Patentansprüche 1 bis 6,
**dadurch gekennzeichnet, dass** der Signalisierungskanaldatenumsetzer (51) redundant realisiert ist.

8. Gateway nach einem der Patentansprüche 1 bis 7,
**dadurch gekennzeichnet, dass** der Nutzkanaldatenumsetzer (50) redundant realisiert ist.

9. Gateway nach einem der Patentansprüche 1 bis 8,
**dadurch gekennzeichnet, dass** die leitungsvermittelnden Nutz-/Signalisierungskanal-Datenschnittstellen PCM30-Datenschnittstellen darstellen.

10. Verfahren zum gegenseitigen Verbinden von einem leitungsvermittelnden Telekommunikationsnetzwerk (1) mit einem paketvermittelnden Telekommunikationsnetzwerk (2) bestehend aus den Schritten:
a) Übertragen von ausschließlich Nutzkanaldaten (ND) über eine zusätzliche leitungsvermittelnde Nutz-/Signalisierungskanal-Datenschnittstelle (k[cic4]);
b) Übertragen von zusätzlicher Signalisierungsinformation (SD(cic4)) für die zusätzliche leitungsvermittelnde Nutz-/Signalisierungskanal-Datenschnittstelle (k[cic4]) über eine bereits existierende vorbestimmte Nutz-/Signalisierungskanal-Datenschnittstelle (k[cic3]);
c) Herausfiltern und Auswerten der übertragenen zusätzlichen Signalisierungsinformation (SD(cic4)) durch einen Signalisierungskanaldatenumsetzer (51); und
d) Ansteuern eines Nutzkanaldatenumsetzers (50) zum Umsetzen der übertragenen ausschließlichen Nutzkanaldaten (ND) von einem leitungsvermittelnden Format in ein paketvermittelndes Format in Abhängigkeit von der ausgewerteten zusätzlichen Signalisierungsinformation (SD(cic4)).

11. Verfahren nach Patentanspruch 10,
**dadurch gekennzeichnet, dass** beim Herausfiltern in Schritt c) alle Nutzdaten (ND) sowie nicht relevante Signalisierungskanaldaten (ND, SD(x)) transparent in der bereits existierenden Nutz-/Signalisierungskanal-Datenschnittstelle (k[cic3]) weitergeleitet werden.

12. Verfahren nach Patentanspruch 10 oder 11,
**dadurch gekennzeichnet, dass** das Auswerten der zusätzlichen Signalisierungsinformation (SD(cic4)) in Schritt c) ein Umsetzen in ein Media Gateway Control Protocol aufweist.

13. Verfahren nach einem der Patentansprüche 10 bis 12,
**dadurch gekennzeichnet, dass** das Auswerten der zusätzlichen Signalisierungsinformation (SD(cic4)) in Schritt c) ferner ein Umsetzen in ein H.323-Protokoll aufweist.

14. Verfahren nach einem der Patentansprüche 10 bis 13,
**dadurch gekennzeichnet, dass** das paketvermittelnde Format ein Internet-Protokoll (IP) und das leitungsvermittelnde Format ein Protokoll gemäß dem zentralen Zeichengabesystem Nr. 7 (CCS7) aufweist.

## Claims

1. Gateway for interconnection of a line-switching telecommunications network (1) and a packet-switching telecommunications network (2) having a user channel data converter (50) for converting user channel data between a line-switching and a packet-switching format; and having a signaling channel data converter (51) for converting signaling data between the line-switching and the packet-switching format,
**characterized in that**
the user channel data converter (50) is connected via at least one additional line-switching user/signaling channel data interface (k[cic4]) for exclusive transmission of user channel data (ND) to a switching center (3) in the line-switching telecommunications network (1), and via a packet-switching data interface (IP) to the packet-switching telecommunications network (2), and
the signaling channel data converter (51) is connected in an already existing user/signaling channel data interface (k[cic3]) by which means signaling information (SD(cic4)) which is additionally transmitted on this data interface (k[cic3]) for the additional user/signaling channel data interface (k[cic4]) is filtered out, and the signaling channel data converter (51) actuates the user channel data converter (50) on the basis of the filtered-out signaling information (SD(cic4)).

2. Gateway according to patent claim 1,
**characterized in that** the signaling channel data converter (51) actuates the user channel data converter (50) via a specific signaling channel data interface (MGCP).

3. Gateway according to patent claim 1 or 2,
**characterized in that** the signaling channel data converter (51) is connected via a further signaling data interface (H.323) directly to the packet-switching telecommunications network (2), and allows a direct path search in the packet-switching telecommunications network (2).

4. Gateway according to one of patent claims 1 to 3,
**characterized in that** the line-switching format uses the central signaling system no. 7 (CCS7), and the packet-switching format uses the Internet Protocol (IP).

5. Gateway according to one of patent claims 2 to 4,
**characterized in that** the specific signaling data interface (MGCP) represents an ETHERNET data interface, and uses the Media Gateway Control Protocol as the format.

6. Gateway according to one of patent claims 1 to 5,
**characterized in that** the signaling channel data converter (51) passes on all the user channel data (ND) as well as non-relevant signaling data (SD(x)) transparently.

7. Gateway according to one of patent claims 1 to 6,
**characterized in that** the signaling channel data converter (51) is based on redundant design.

8. Gateway according to one of patent claims 1 to 7,
**characterized in that** the user channel data converter (50) is based on redundant design.

9. Gateway according to one of patent claims 1 to 8,
**characterized in that** the line-switching user/signaling channel data interfaces represent PCM30 data interfaces.

10. Method for interconnecting a line-switching telecommunications network (1) and a packet switching telecommunications network (2) comprising the following steps:
a) Transmission of exclusively user channel data (ND) via an additional line-switching user/signaling channel data interface (k[cic4]);
b) Transmission of additional signaling information (SD(cic4)) for the additional line-switching user/signaling channel data interface (k[cic4]) via an already existing predetermined user/signaling channel data interface (k[cic3]);
c) Filtering out and evaluation of the transmitted additional signaling information (SD(cic4)) via a signaling channel data converter (51); and
d) Actuation of a user channel data converter (50) for converting the transmitted exclusive user channel data (ND) from a line-switching format to a packet-switching format as a function of the evaluated additional signaling information (SD(cic4)).

11. Method according to patent claim 10,
**characterized in that**, during the filtering process in step c), all the user channel data (ND) and non-relevant signaling data (SD(x)) is passed on transparently in the already existing user/signaling channel data interface (k[cic3]).

12. Method according to patent claim 10 or 11,
**characterized in that** the evaluation of the additional signaling information (SD(cic4)) in step c) includes conversion to a Media Gateway Control Protocol.

13. Method according to one of patent claims 10 to 12,
**characterized in that** the evaluation of the additional signaling information (SD(cic4)) in step c) furthermore includes conversion to an H.323 protocol.

14. Method according to one of patent claims 10 to 13,
**characterized in that** the packet-switching format uses an Internet Protocol (IP), and the line-switching format uses a protocol in accordance with the central signaling system no. 7 (CCS7).

## Revendications

1. Passerelle pour relier de façon réciproque un réseau de télécommunication à commutation de circuits (1) avec un réseau de télécommunication à commutation de paquets (2) avec un convertisseur de données de canal utile (50) pour la conversion de données de canal utile entre un format à commutation de circuits et un format à commutation de paquets ; et
un convertisseur de données de canal de signalisation (51) pour la conversion de données de signalisation entre le format à commutation de circuits et le format à commutation de paquets,
**caractérisé en ce que**
le convertisseur de données de canal utile (50) est relié par au moins une interface de données de canal utile/canal de signalisation (k[cic4]) à commutation de circuits supplémentaire pour la transmission exclusive de données de canal utile (ND) à un central commutateur (3) du réseau de télécommunication à commutation de circuits (1) et par une interface de données (IP) à commutation de paquets au réseau de télécommunication à commutation de paquets (2), et
le convertisseur de données de canal de signalisation (51) est intégré dans une interface de données de canal utile/canal de signalisation (k[cic3]) existant déjà, une information de signalisation (SD(cic4)) transmise en supplément sur cette interface de données (k[cic3]) étant filtrée pour l'interface de données de canal utile/canal de signalisation (k[cic4]) supplémentaire et le convertisseur de données de canal de signalisation (51) activant le convertisseur de données de canal utile (50) sur la base des informations de signalisation (SD(cic4)) filtrées.

2. Passerelle selon la revendication 1,
**caractérisée en ce que** le convertisseur de données de canal de signalisation (51) active au moyen d'une interface de données de canal de signalisation (MGCP) spéciale avec le convertisseur de données de canal utile (50).

3. Passerelle selon la revendication 1 ou 2,
**caractérisée en ce que** le convertisseur de données de canal de signalisation (51) est relié au moyen d'une autre interface de données de signalisation (H.323) directement au réseau de télécommunication à commutation de paquets (2) et permet une recherche de chemin directe dans le réseau de télécommunication à commutation de paquets (2).

4. Passerelle selon l'une quelconque des revendications 1 à 3,
**caractérisée en ce que** le format à commutation de circuits présente le système de signalisation central n° 7 (CCS7) et le format à commutation de paquets le protocole Internet (IP).

5. Passerelle selon l'une quelconque des revendications 2 à 4,
**caractérisée en ce que** l'interface de données de signalisation (MGCP) spécifique représente une interface de données ETHERNET et présente comme format le Media Gateway Control Protocol.

6. Passerelle selon l'une quelconque des revendications 1 à 5,
**caractérisée en ce que** le convertisseur de données de canal de signalisation (51) transmet de façon transparente toutes les données du canal utile (ND) ainsi que des données de signalisation (SD(x)) non importantes.

7. Passerelle selon l'une quelconque des revendications 1 à 6,
**caractérisée en ce que** le convertisseur de données de canal de signalisation (51) est réalisé de façon redondante.

8. Passerelle selon l'une quelconque des revendications 1 à 7,
**caractérisée en ce que** le convertisseur de données de canal utile (50) est réalisé de façon redondante.

9. Réalisation selon l'une quelconque des revendications 1 à 8,
**caractérisée en ce que** les interfaces de données de canal utile/canal de signalisation à commutation de circuits représentent des interfaces de données PCM30.

10. Procédé pour relier de façon réciproque un réseau de télécommunication à commutation de circuits (1) à un réseau de télécommunication à commutation de paquets (2) comprenant les étapes suivantes :
a) transmission exclusivement de données de canal utile (ND) au moyen d'une interface de données de canal utile/canal de signalisation (k[cic4]) à commutation de circuits supplémentaire,
b) transmission d'information de signalisation (SD(cic4) supplémentaire pour l'interface de données de canal utile/canal de signalisation (k[cic4)) à commutation de circuits supplémentaire par une interface de données de canal utile/canal de signalisation (k[cic3]) prédéfinie déjà existante ;
c) filtrage et analyse de l'information de signalisation (SD(cic4)) supplémentaire et transmise par un convertisseur de données de canal de signalisation (51) ; et
d) activation d'un convertisseur de données de canal utile (50) pour la conversion des données de canal utile (ND) exclusives transmises d'un format à commutation de circuits dans un format à commutation de paquets en fonction de l'information de signalisation (SD(cic4)) supplémentaire analysée.

11. Procédé selon la revendication 10,
**caractérisé en ce que**, lors du filtrage à l'étape c), toutes les données utiles (ND) et des données de canal de signalisation (ND, SD(x)) non importantes sont transmises de façon transparente dans l'interface de données de canal utile/canal de signalisation (k[cic3]) déjà existante.

12. Procédé selon la revendication 10 ou 11,
**caractérisé en ce que** l'analyse de l'information de signalisation (SD(cic4)) supplémentaire présente à l'étape c) une conversion dans un Media Gateway Control Protocol.

13. Procédé selon l'une quelconque des revendications 10 à 12,
**caractérisé en ce que** l'analyse de l'information de signalisation (SD(cic4)) supplémentaire présente à l'étape c) également une conversion dans un protocole H.323.

14. Procédé selon l'une quelconque des revendications 10 à 13,
**caractérisé en ce que** le format à commutation de paquets présente un protocole Internet (IP) et le format à commutation de circuits un protocole selon le système de signalisation central n° 7 (CCS7).
